# EUROPEAN PATENT APPLICATION

(11) **EP 2 824 892 A1**
(43) Date of publication of application: **14.01.2015**
(21) Application number: 13305975.8
(22) Date of filing: 09.07.2013
(51) Int. Cl.: H04L 29/08

(54) **Process for delivering an item from a data repository to a user through at least one node in a network**

(71) Applicant: ALCATEL LUCENT, 92100 Boulogne-Billancourt (FR)
(72) Inventor: Carofiglio, Giovanna, 91620 Nozay (FR); Gallo, Massimo, 91620 Nozay (FR); Muscariello, Luca, 92290 Chatenay Malabry (FR)
(74) Representative: Sayettat, Julien Christian

(57) **Abstract**

Process for delivering an item from a data repository (1) to a user (2) through at least one node (3, 3a-3e) in a network, said process providing for the sending of a request comprising a name of said item and, upon the receipt of said request by a node (3a), for checking in a forwarding table the presence of an entry for at least a prefix of said name, said entry comprising information about at least one output interface (1, 3, 3b-3d) to which said request should be forwarded to receive back the item at said node and thus to delivery it to said user, said process further providing, upon the receipt of the request, for: checking in the forwarding table the number of output interfaces (1, 3, 3b-3d) to which said request should be forwarded; when said number exceeds a predetermined integer, inserting with a probability p said name into a vector comprising a fixed sized capacity of k names, k being a positive integer, said vector storing said name with a pointer that links said name to the entry in the forwarding table corresponding to the prefix of said name; and periodically inserting k names stored by said vector into respectively an entry in the forwarding table.

## Description

The invention relates to a process for delivering an item from a data repository to a user through at least one network node in a network, such as a network node for implementing such a process and an architecture comprising at least one data repository for storing items and at least one of such network node.

The usage of Internet has significantly evolved over the past years and is today mostly centered around content dissemination and retrieval. Thus, there is an exponential growth of digital information diffused over Internet, thanks to cheap storage and bandwidth supports and due to the increasing popularity of highly demanding services, such as cloud computing and video delivery.

However, the architecture of Internet is still based on an end to end model and appears to be unsuited to deal with these new trends. Thus, over the top solutions has been proposed, such as Content Delivery Networks (CDN) that have been designed and widely deployed to overcome this mismatch at application layers, said networks carrying nowadays a large amount of Internet traffic. In parallel, significant research projects have been funded in the last years for defining novel architectures for the future Internet, such as the Global Environment for Network Innovations (GENI) project explored by the United States computing community with support from the National Science Foundation (NSF) governmental agency, or the Future Internet Assembly project supported by the European Union.

In this research area, Content Centric Network (CCN) proposals, as presented in further details in the article "Networking Named Content" of the PARC® company (V. Jacobson, D.K. Smetters, J.D. Thornton, M. Plass, N. Briggs, R. Braynard, Conference on emerging Networking EXperiments and Technologies, 2009), aim at redesigning the Internet architecture by placing named data instead of their physical location at the centre of the communication paradigm. CCN networks are characterized by receiver driven transport protocols, wherein data items are only sent in response to requests of users, and by packet level caching which is transparently performed at every node of said networks. Specifically, content items are split into packets that are uniquely identified and permanently stored in at least one data repository of the network, and users retrieve items from said repositories through per packet requests, notably called "Interests", that comprise explicitly the names of the requested items, said requests triggering the delivery of data packets on the reverse path of said requests.

CCN networks thus rely on a name based routing protocol that guarantees that requests are properly routed towards a data repository by following at least a path between intermediate network nodes in said networks. To do so, every network node keeps tracks of the outstanding requests of the users by means of a request table, more particularly called "Pending Interest Table" (PIT), said table comprising entries for each of the items that have been requested at said node, said entries comprising in particular the names of said items, said node checking said request table to deliver the requested data items back to the users on the reverse path of the corresponding requests.

Moreover, each entry of the request table comprises a time interval associated to the corresponding request, so that all the requests for the same data item that are received by the network node during said time interval will not be forwarded upstream towards the data repository as long as the first request for said item received at said not has not be treated. Finally, after having forwarding a request, the network node receives the corresponding data item in a local cache, notably called "Content Store" (CS), and delivers said item towards the users.

Upon the receipt of a request from a user, a network node of such a CCN network prior checks if the requested item is already present in its implemented local cache. If it is the case, the node sends back the item towards the user through the input interface from which said node has received the request.

Otherwise, the network node checks in its implemented request table the presence of an entry for the requested item by basing on the name of said item. If there is such an entry in the request table, it means that this node is already treating a request for the item from another user, and the received request is thus discarded. Otherwise, a new entry is created in the request table for the received request.

Moreover, if there is no entry in the request table for the requested item as the node receives the request, said node checks a forwarding table for looking for an eventual entry comprising at least a prefix of the name of the requested item, said entry also comprising at least one output interface to which the request should be forwarded to receive back the requested item. In particular, such a checking can be performed according to a Longest Prefix Match (LPM) algorithm.

Afterwards, distributed algorithms leverage information available locally in the forwarding table at prefix granularity, notably by associating metric to each prefix entry in the forwarding table and per output interface, said metric being for example the delivery time measured behind said output interface or the number of pending requests treated on said interface. In particular, this metric is dynamically computed and exploited to take the decision about the output interface to select for forwarding a request.

The article "Adaptive Forwarding in Named Data Networking" (C. Yi, A. Afanasyev, L. Wang, B. Zhang and L. Zhang, the ACM SIGCOMM Computer Communication Review, 2012) describes an adaptive forwarding mechanism for CCN networks wherein an interface ranking mechanism is performed at each network node according to a three coloured scheme. Moreover, congestion control mechanisms are envisaged at the node via the sending back of "Interest" Negative Acknowledgements (NACK) to the users.

Moreover, the article "TECC: Towards Collaborative In-network Caching Guided by Traffic Engineering" (H. Xie, G. Shi, P. Wang, the 31st annual IEEE International Conference on Computer Communications, 2012) described a mechanism called "Traffic Engineering guided Collaborative Caching" (TECC) that uses traffic engineering techniques for forwarding requests to provide collaborative caching capabilities, so as to minimise the total network load at longer timescales.

However, these CCN networks are not entirely satisfactory, as the distributed algorithms employed for forwarding requests only leverage information of the forwarding table at prefix granularity without taking into account the popularity of items the name thereof share a same prefix.

The invention aims to improve the prior art by proposing a process which associates the benefits of a forwarding scheme based on the name for the most popular items while guaranteeing scalability of the forwarding table by keeping a low additional step at output interfaces.

For that purpose, and according to a first aspect, the invention relates to a process for delivering an item from a data repository to a user through at least one node in a network, said process providing for the sending by said user of a request comprising a name of said item, said process further providing, upon the receipt of said request by a network node, for checking in a forwarding table of said network node the presence of an entry for at least a prefix of said name, said entry comprising information about at least one output interface to which said request should be forwarded to receive back the requested item at said node and thus to delivery said item to said user, said process further providing, upon the receipt of the request by said node, for:
- checking in the forwarding table the number of output interfaces to which the request should be forwarded;
- when said number exceeds a predetermined integer, inserting with a probability p said name into a vector that comprises a fixed sized capacity of k names, k being a positive integer, said vector storing said name with a pointer that links said name to the entry in the forwarding table corresponding to the prefix of said name;
- periodically inserting k names stored by said vector into respectively a dedicated entry in the forwarding table.

According to a second aspect, the invention relates to a network node for delivering an item from a data repository to a user in a network, said node comprising means for receiving a request sent by said user that comprises a name of said item, means for implementing a forwarding table that comprises entries for prefixes of names of items that are stored in the data repository, each of said entries comprising information about at least one output interface to which a request comprising a name that matches with the prefix of said entry should be forwarded, said node further comprising means for receiving back the requested item and means for delivering said item to said user, said node further comprising:
- means for checking in the forwarding table the number of output interfaces to which the request should be forwarded;
- means for inserting said name with a probability p into a vector when said number exceeds a predetermined integer, said vector having a fixed sized capacity of k names, k being a positive integer, said vector storing said name with a pointer that links said name to the entry in the forwarding table corresponding to the prefix of said name;
- means for periodically inserting k names stored by said vector into respectively a dedicated entry in the forwarding table.

According to a third aspect, the invention relates to an architecture for a network comprising a data repository for storing items and at least one network node for delivering an item from said data repository to a user of said network through said node, said node comprising means for receiving a request sent by said user that comprises a name of said item, means for implementing a forwarding table that comprises entries for prefixes of names of items that are stored in the data repository, each of said entries comprising information about at least one output interface to which a request comprising a name that matches with the prefix of said entry should be forwarded, said node further comprising means for receiving back the requested item and means for delivering said item to said user, said node further comprising:
- means for checking in the forwarding table the number of the output interfaces to which the request should be forwarded;
- means for inserting said name with a probability p into a vector when said number exceeds a predetermined integer, said vector having a fixed sized capacity of k names, k being a positive integer, said vector storing said name with a pointer that links said name to the entry in the forwarding table corresponding to the prefix of said name;
- means for periodically inserting k names stored by said vector into respectively a dedicated entry in the forwarding table.

Other aspects and advantages of the invention will become apparent in the following description made with reference to the appended figures, wherein:
- figure 1 represents schematically specific steps of a process according to the invention;
- figure 2 represents schematically an architecture comprising a data repository and at least a network node for implementing the process of the invention.

In relation to those figures, a process for delivering an item from a data repository 1 to a user 2 through at least one network node 3 in a network, such as a network node 3 for implementing such a process are described below.

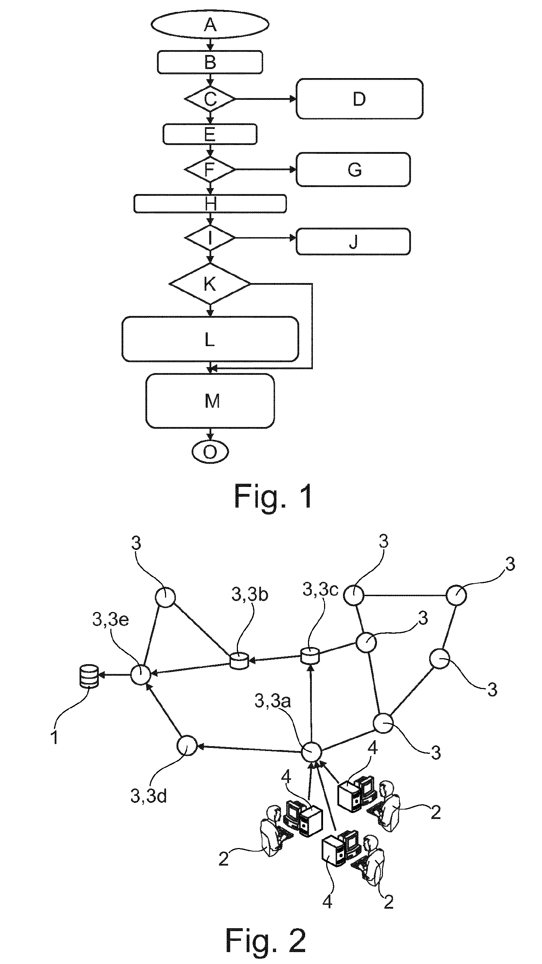

In relation to figure 2, several of such network nodes 3 are implemented into an architecture of a network for delivering items stored in a data repository 1 of said architecture to at least one user 2 connected to said network through his terminal 4.

The architecture can be notably implemented according to the Content Centric Network (CCN) standard, but it can also be implemented according to any named-based routing standard, such as an Information Centric Network (ICN) standard or an advanced Content Delivery Network (CDN) standard.

In a known manner, the process provides for the sending by the user 2 of a request comprising a name of the item said user is interested in. To do so, the network nodes comprise each means for receiving such a request, so that, as a user 2 sends such a request through his terminal 4, one of the network nodes 3, especially the geographically closest node 3a, receives said request. In particular, the request can be an Interest packet according to the CCN standard.

Upon the receipt of the request, the process provides for checking in a forwarding table of the network node 3, 3a the presence of an entry for a prefix of the name of the requested item. To do so, the network node 3a comprises means for implementing a forwarding table that comprises entries for prefixes of names of items that are stored in the data repository 1.

The forwarding table can be notably a Forwarding Information Base (FIB) the entries thereof comprises each information about at least one output interface to which a request comprising a name that matches with the prefix of said entry should be forwarded, said output interface being for example directly the data repository 1 wherein the requested item is permanently stored, or another node 3 of the network, so as to receive back said requested item at the node 3a and thus to delivery said item to the user 2.

Moreover, the node 3a comprises means for checking in the forwarding table the presence of an entry for a prefix of the name of the requested item, so that the request should be forwarded to output interfaces 1, 3 according to said entry.

In particular, the process can provide for prior checking in a local cache of the network node 3, 3a the presence of the requested item, so that the forwarding table should be checked only when said requested item is not present in said cache. In particular, the network node 3, 3a comprises a local cache for storing temporarily items from the data repository 1, for example after the receipt of a former request from another user 2. Moreover, the network node 3, 3a also comprises means for checking its local cache the presence of the requested item.

In relation to figure 1, the network node 3a receives at a step A the request from the user 2, which triggers a following step B wherein the means for checking the local cache extract from the request the name of the requested item and a consecutive step C wherein said means checks the local cache, for example by matching the extracted name with the names of the items that are temporarily stored in said cache.

If the requested item is effectively stored in the local cache, then the network node 3a directly sends said item to the user 2 at a step D and the process is achieved upon said delivering. Otherwise, the process continues.

As the requested item is not stored in the local cache of the network node 3a, the process can thus provide for prior checking in a request table of said node the presence of an entry for the name of said item, said entry corresponding to a request for said item that have been previously received from another user 2 by the node 3a, so that the forwarding table of said node should be checked only when said request table does not comprises such an entry.

To do so, the node 3a comprises means for implementing a request table that comprises such entries for names of items stored in the data repository 1, each of said entries corresponding to a request that have been previously received by the node 3a and comprising information about an input interface to which the node 3, 3a should send back the corresponding item, for example towards directly the user 2 that have sent the request or towards another node 3 that should deliver said item to said user. In particular, the request table can be a Pending Interest Table (PIT) according to the CCN standard.

Moreover, the node 3a comprises means for checking in the above mentioned request table the presence of an already existing entry for the requested item.

In relation to figure 1, the process comprises a step E following the step C, wherein the name of the requested item is transmitted to the means for checking the request table as said item is not present in the local cache, such as a consecutive step F wherein said means effectively check said request table, for example by matching the transmitted name with the names registered in the entries of said request table.

If an entry of the request table comprises the name of the requested item, it means that a request for said item, notably from another user 2, have already been received by the node 3a. Thus, the process can provide for updating the already existing entry, notably by adding to said entry information about the input interface to which the node 3a should send back the requested item so that the user 2 that have sent said request should receive said item. To do so, the node 3a comprises means for doing such an updating.

In relation to figure 1, the process comprises a step G following the step E, wherein the means for updating of the node 3a update the already existing entry, so that the requested item should be forwarded to the user 2 that have sent the outstanding request and to the user that have sent the previous request for which said already existing entry has been registered.

Otherwise, the means for checking the forwarding table of the node 3a are adapted to check said forwarding table. In relation to figure 1, the process comprises a step H following the step F, wherein the name of the requested item is transmitted to the means for checking the forwarding table, such as a consecutive step I wherein said means check said forwarding table, notably by matching said name with the prefixes registered in the entries of said table. In particular, the means for checking can use a Longest Prefix Match (LPM) algorithm to perform the matching with better accuracy.

If the forwarding table comprises no entry with a prefix matching with the name of the requested item, the process triggers a step J wherein the request is discarded and the node 3a is no longer involved in the delivering of the item. Otherwise, the node 3a forwards the request to the output interfaces according to the corresponding entry of the forwarding table, for example towards directly the data repository 1 or towards another node 3, so that the node 3a will receive back the requested item and send said item to the user 2 through dedicated input interfaces according to the corresponding entry in the request table.

For a more relevant forwarding of the requests, the process provides for associating to each output interface 1, 3 in the forwarding table a metric which depends on the prefix of a name of the item, so that a request comprising said name should be forwarded to said output interfaces according to said metrics. In particular, the output interface can be a network node 3 and this metric can thus reflect the item proximity of said node, i.e. the overhall hit probability for a request to be successfully forwarded along different paths of the network towards the data repository 1 and the overhall associated delay for reception of the requested item. Moreover, this metric can reflect the congestion status of the node 3, i.e. the quality of the residual network path between said node and the data repository 1.

To do so, the means for implementing the forwarding table of the node 3a are adapted to associate such metrics to each output interface 1, 3 in said table. In particular, when an output interface is another node 3, said another node can comprise means for locally calculating a metric depending on at least a prefix according to performance statistics of said another node. Moreover, the means for implementing the forwarding table of the node 3a receiving the request being adapted to interact with the means for metric calculation of the another node 3 for associating said metric to said another node into the concerned entry of the forwarding table.

For example, the means for metric calculation can calculate an average of the number of pending requests at the node 3 by monitoring the request table implemented into said node. Those means for metric calculation can also monitor the time difference between the receipt of a request at the node 3 and the reception of the requested item by the user 2 for calculating an average delay of response at said node.

Thus, as a node 3a receives from a user 2 a request and should forward said request to output interfaces 1, 3, notably another nodes 3 in the network, the node 3a interacts with its implemented forwarding table to select the more accurate another node 3 according to the metric associated to said another node for the name contained in said request, notably by using a randomised algorithm that is weighted by said metrics. For example, as the metric is an average of pending requests, the request is most likely to be forwarded to the interface with the lowest average of pending requests to avoid any congestion in most sought interfaces.

Thereby, in common architectures implementing a CCN network, the nominal requests are forwarded between nodes 3, 3a through a data repository 1 according to general prefixes of the names of the requested items. Indeed, nodes 3, 3a implement forwarding tables that are completed with such prefixes in order to reduce their sizes. Thus, it seems natural to implement a forwarding scheme based on name prefixes and performance statistics of the nodes 3, 3a according to their average number of pending requests.

However, a prefix registered in an entry of a forwarding base potentially represents millions of different names that exhibit different popularities. Indeed, popularity of items on a broad network such as Internet is commonly approximated by a power law distribution, for example according to the empiric Zipf law or to the Poisson process, so that a small amount of items are really responsible for the majority of requests from users 2. Thus, the common approach based on prefixes and output interfaces metrics can lead to a loss of performance because of an insufficient precision in the forwarding of requests.

To overcome these drawbacks, the process further provides for taking into account the popularity of the requested items by proposing a per name approach for differentiating the most popular items with corresponding metrics that can assume significantly different values from the values of metrics of other less popular items.

To do so, the process further provides, upon the receipt of a request by a node 3a, for checking in the forwarding table of the node 3a the number of output interfaces 1, 3, 3b-3e to which said request should be forwarded, said node also comprising means for checking said number.

The process further provides, when the number of output interfaces 1, 3, 3b-3e to which the request should be forwarded exceeds a predetermined integer, for inserting the name contained in said request with a probability p into a vector that has a fixed size capacity of k names, k being a positive integer, said vector storing said name with a pointer that links said name to the entry in the forwarding table corresponding to the prefix of said name. In particular, the vector can be a First In First Out (FIFO) vector or a Least Recently Used (LRU) vector. Moreover, the vector is a per prefix vector linked to the prefix of the name and thus to the corresponding entry of the forwarding table, the pointer linking said vector to said entry.

To do so, the node 3a comprises means for inserting the name into such a vector with a probability p. In particular, the name can be inserted in the vector only if the number of output interfaces 1, 3 to which the request should be forwarded is strictly greater than 1, as the apart monitoring of most popular items should not bring benefits if an item the request thereof is to be forwarded to only one output interface 1, 3.

In relation to figure 1, the process comprises a step K following the step I of the forwarding table checking, wherein the the forwarding table is checked for evaluating the number of output interfaces 1, 3 to which the request should be forwarded. If this number exceeds a predetermined integer, notably by being strictly greater than 1, the process triggers a consecutive step L wherein the name of the requested item is inserted in the above mentioned vector with a probability p and with a pointer for linking said name with its corresponding prefix entry of the forwarding table.

Thus, the vector statistically contains the names for a specific prefix that are forwarded the most by the network node 3a, said names being thus considered as the most popular names for said prefix by their presence in said vector.

Afterwards, the process provides for periodically inserting, for example each t minutes, k names stored by the vector into respectively a dedicated entry in the forwarding table. To do so, the node 3a comprises means for periodically performing such insertions. In relation to figure 1, the process performs this periodic insertion at step M and forwards the request to the appropriate output interfaces 1, 3 at final step O. In particular, thanks to the pointers associated to each of the k names, the dedicated entries are created as specifications of the entries comprising the prefixes of said k names.

On the contrary, if the number of output interfaces 1, 3 to which the request should be forwarded is not great enough, the process directly triggers the step M after the step K, so that said request is simply forwarded at step O to output interfaces 1, 3 according to a matching prefix of an entry in the forwarding table and metrics of said output interfaces that are based on average number of pending requests.

In the both cases, as no correspondent entry was found in the request table of the node 3a, the means for updating said request table create such an entry at this step M.

Thus, the k most popular items can benefit from a dedicated entry in the forwarding table, so that requests for said popular items will be forwarded to output interfaces 1, 3 according to a more precised per name approach based on previous values of individual metrics associated to said k items. On the other hand, less popular items should be forwarded according to a common prefix entry of the forwarding table. This hybrid approach allows for benefiting from a finer granularity in the forwarding of requests for the significantly popular items. To avoid saturation in the forwarding table, and thus to ensure the efficiency of this hybrid forwarding scheme, the entries of the forwarding table that comprise entire names of items should be limited, so that only the k most popular items would benefit from such entries. Indeed, if the number of dedicated entries is too important, the particular approach of the process may lose interest.

In particular, the means for popularity checking of the node 3 continuously monitors the popularity of the names of the requested items, so that former popular items which lose popularity can be evaluated as not popular enough at step K and thus their corresponding requests should be forwarded at step M according to a general prefix entry in the forwarding table, while the specific entries that was dedicated to the names of said items should be deleted, notably to be uploaded during a next periodic insertion step with the names of new popular items stored by the dedicated per prefix vector.

In relation to figure 2, this hybrid forwarding approach of the process can lead to the forwarding of requests for popular items on paths that are different from the common path on which are forwarded the requests for less popular items that shares a common prefix with said popular items. For example, assume that the data repository stores 18000 items the names thereof share a common prefix, each of said items comprising 1000 packet chunks of 1 kB (Kilo Bytes), said items presenting a popularity profile managed by the Zipf law with a shape parameter of 1.7, i.e. that the rank 1 corresponds to the most popular item whereas the rank 18000 corresponds to the least popular item. Moreover, a user 2 sends to the geographically closest node 3a a request for one of the stored items according to a Poisson process with a rate of 6.5 items per second.

Starting from the node 3a, nodes 3b, 3c present local caches with more important capacities, respectively 160 MB (Mega Bytes) and 80 MB, than that of the node 3d. Thus, if the received request concerns a popular item, nodes 3b, 3c appear as the most relevant output interfaces for forwarding said request, even if the path linking the nodes 3a, 3d, 3e seems shorter to reach the data repository 1. Indeed, the popular items can be retrieved at the greater node 3b with a rate that is twice as important as that of the common path passing through nodes 3a, 3d, 3e. On the contrary, if the received request concerns an unpopular item, the common path linking the nodes 3a, 3b, 3e should be sufficient.

Thus, the hybrid forwarding approach can easily outperform from about 30% the conventional per prefix forwarding approach. Nevertheless, the gains of performance provided by such an approach are more visible for an item with a popularity rank comprised between 10 and 30 and tends to stabilise over the rank 30, so that the per name approach should be limited to a restrained number k among the most popular item.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for delivering an item from a data repository (1) to a user (2) through at least one node (3, 3a-3e) in a network, said process providing for the sending by said user of a request comprising a name of said item, said process further providing, upon the receipt of said request by a network node (3a), for checking in a forwarding table of said network node the presence of an entry for at least a prefix of said name, said entry comprising information about at least one output interface (1, 3, 3b-3e) to which said request should be forwarded to receive back the requested item at said node and thus to delivery said item to said user, said process being **characterized in that** it further provides, upon the receipt of the request by said node, for:
- checking in the forwarding table the number of output interfaces (1, 3, 3b-3d) to which the request should be forwarded;
- when said number exceeds a predetermined integer, inserting with a probability p said name into a vector that comprises a fixed sized capacity of k names, k being a positive integer, said vector storing said name with a pointer that links said name to the entry in the forwarding table corresponding to the prefix of said name;
- periodically inserting k names stored by said vector into respectively a dedicated entry in the forwarding table.

2. Process according to claim 1, **characterized in that** it provides for prior checking in a local cache of the network node (3a) the presence of the requested item, the forwarding table being checked when said requested item is not present in said cache.

3. Process according to claim 2, **characterised in that** it provides, when the requested item is not present in the cache, for prior checking in a request table of the network node (3a) the presence of an already existing entry for the name of said item, said entry corresponding to a former request for said item that have been previously received from another user (2) by said node, said entry comprising information about an input interface (4, 3, 3b-3e) to which said node should send back said item so that said another user should receive said item, the forwarding table further being checked when said request table does not comprises such an entry.

4. Process according to claim 3, **characterized in that** it provides for updating the already existing entry with information about an input interface (4, 3, 3b, 3e) to which the node (3a) should send back the requested item so that the user (2) that have sent the request should receive said item - respectively for creating in the request table a new entry for the name of the requested item - when the request table already comprises - respectively does not comprise - an entry for said name.

5. Process according to any of claims 1 to 4, **characterized in that** it provides for inserting the name into the vector only if the number of output interfaces (1, 3, 3b-3e) to which the request should be forwarded is strictly greater than 1.

6. Process according to any of claims 1 to 5, **characterized in that** it provides for associating to each output interface (1, 3, 3b-3e) in the forwarding table a metric which depends on at least the prefix of a name of an item, said metric being locally calculated in said output interface according to performance statistics of said output interface, the request comprising said name being forwarded to said output interfaces according to said metrics.

7. Process according to claim 6, **characterized in that** the metric of an output interface (3, 3b-3e) comprises an average of a number of pending requests that is calculated by monitoring a request table implemented into said output interface and/or an average day of response of said output interface that is calculated by monitoring the time difference between the receipt of a request at said output interface and the reception of the requested item by the user (2).

8. Network node (3a) for delivering an item from a data repository (1) to a user (2) in a network, said node comprising means for receiving a request sent by said user that comprises a name of said item, means for implementing a forwarding table that comprises entries for prefixes of names of items that are stored in the data repository (1), each of said entries comprising information about at least one output interface (1, 3, 3b-3e) to which a request comprising a name that matches with the prefix of said entry should be forwarded, said node further comprising means for receiving back the requested item and means for delivering said item to said user, said node being **characterized in that** it further comprises:
- means for checking in the forwarding table the number of output interfaces (1, 3, 3b-3e) to which the request should be forwarded;
- means for inserting said name with a probability p into a vector when said number exceeds a predetermined integer, said vector having a fixed sized capacity of k names, k being a positive integer, said vector storing said name with a pointer that links said name to the entry in the forwarding table corresponding to the prefix of said name;
- means for periodically inserting k names stored by said vector into respectively a dedicated entry in the forwarding table.

9. Network node (3a) according to claim 8, **characterized in that** it comprises a local cache for storing temporarily items from the data repository (1), such as means for checking in said cache the presence of the requested item, the request being forwarded according to a matching prefix of an entry of the forwarding table when said requested item is not present in said cache.

10. Network node (3a) according to claim 9, **characterized in that** it comprises means for implementing a request table that comprises entries for names of items stored in the data repository (1), said entries corresponding to former requests that have been previously received by said node, said node further comprising means for, when the requested item is not present in the local cache, checking in the request table the presence of an already existing entry for the name of said item, said entry corresponding to a former request sent by another user (2) and comprising information about an input interface (3, 3b-3e, 4) to which said node should send back said requested item so that said another user should receive said item, the request being forwarded according to a matching prefix of an entry of the forwarding table when said request table does not comprise such an entry.

11. Network node (3a) according to claim 10, **characterized in that** it comprises means for updating the already existing entry with information about an input interface (3, 3b-3e, 4) to which the node should send back the requested item so that the user (2) that have sent the request should receive said item - respectively for creating in the request table a new entry for the name of the requested item - when the request table already comprises - respectively does not comprise - an entry for said name.

12. Network node (3a) according to any of claims 8 to 11, **characterized in that** the means for inserting the names into the vector are triggered only if the number of output interfaces (1, 3, 3b-3e) to which the request should be forwarded is strictly greater than 1.

13. Network node (3a) according to any of claims 8 to 12, **characterized in that** the means for implementing the forwarding table are adapted to associate to each output interface (1, 3, 3b-3e) in said forwarding table a metric which depends on at least the prefix of the name of an item, the request comprising said name being forwarded to output interfaces (1, 3, 3b-3e) according to said metric.

14. Network node (3a) according to claim 14, **characterized in that** it comprises means for locally calculating a metric for said node according to performance statistics of said node.

15. Architecture for a network comprising a data repository (1) for storing items and at least one network node (3a) for delivering an item from said data repository to a user (2) of said network through said node, said node comprising means for receiving a request sent by said user that comprises a name of said item, means for implementing a forwarding table that comprises entries for prefixes of names of items that are stored in the data repository (1), each of said entries comprising information about at least one output interface (1, 3, 3b-3e) to which a request comprising a name that matches with the prefix of said entry should be forwarded, said node further comprising means for receiving back the requested item and means for delivering said item to said user, said architecture being **characterized in that** said node further comprises:
- means for checking in the forwarding table the number of output interfaces (1, 3, 3b-3e) to which the request should be forwarded;
- means for inserting said name with a probability p into a vector when said number exceeds a predetermined integer, said vector having a fixed sized capacity of k names, k being a positive integer, said vector storing said name with a pointer that links said name to the entry in the forwarding table corresponding to the prefix of said name;
- means for periodically inserting k names stored by said vector into respectively a dedicated entry in the forwarding table.
